# FASCICULE DE BREVET EUROPEEN

(11) **EP 1 888 468 B1**
(45) Date de publication et mention de la délivrance du brevet: **01.04.2015**
(21) Numéro de dépôt: 06755535.9
(22) Date de dépôt: 30.05.2006
(51) Int. Cl.: C02F 1/78

(54) **PROCEDE DE TRAITEMENT D'EAU, EN PARTICULIER D'EAU DE CONSOMMATION, ET INSTALLATION DE TRAITEMENT D'EAU**
VERFAHREN ZUR BEHANDLUNG VON WASSER, INSBESONDERE TRINKWASSER, UND WASSERBEHANDLUNGSANLAGE
METHOD FOR TREATING WATER, IN PARTICULAR DRINKING WATER, AND WATER TREATMENT PLANT

(30) Priorité: 08.06.2005 FR 0505817
(43) Date de publication de la demande: 20.02.2008
(73) Titulaire: DEGREMONT, F-92506 Rueil-Malmaison (FR)
(72) Inventeur: PHILIPPON, Luc, St-Jerome, Quebec J7Z 5B3 (CA)
(74) Mandataire: Cabinet Armengaud Aine
(86) Numéro de dépôt international: PCT/FR2006/001222
(87) Numéro de publication internationale: WO 2006/131619

(56) Documents cités:
- EP-A- 1 153 890
- FR-A- 2 429 187
- US-A- 5 178 755
- US-B1- 6 551 519
- PATENT ABSTRACTS OF JAPAN vol. 2000, no. 11, 3 janvier 2001 (2001-01-03) & JP 2000 210685 A (SUMITOMO PRECISION PROD CO LTD), 2 août 2000 (2000-08-02)

## Description

L'invention est relative à un procédé de traitement d'eau comprenant une étape de clarification, une étape d'ozonation et au moins une étape de filtration.

L'étape de clarification est une opération consistant à rendre clair un liquide par filtration, décantation, ou tout autre procédé.

L'invention concerne plus particulièrement, mais non exclusivement, un procédé de traitement d'eau de consommation.

La mise en oeuvre de l'ozonation présente des difficultés techniques qui, actuellement, ne sont pas résolues de manière aussi satisfaisante que souhaité.

L'ozone se trouve dans un gaz vecteur. Une difficulté importante résulte de la sursaturation de l'eau en gaz vecteur dissous qui est à l'origine d'embolie des filtres, c'est-à-dire d'une accumulation de phase gazeuse sur les filtres empêchant une bonne filtration. De plus, dans le cas de filtres biologiques, si le gaz vecteur de l'ozone est l'oxygène, une sursaturation d'oxygène dissous est nuisible au traitement biologique.

Comme autre difficulté on peut citer la dispersion d'ozone dans l'installation de traitement et dans l'environnement par dégazage de l'eau ozonée. Ce dégazage est accentué par la filtration.

L'ozonation est réalisée habituellement à l'aide de bassins de bullage, par injection de l'ozone à l'aide de rampes poreuses dans le fond du bassin, et par montée de bulles d'ozone dans l'eau à traiter. Une perte de charge importante due à la méthode de dégazage entraîne une chute de 0.6 à 1.0 m sur le profil hydraulique. Cette perte de charge s'ajoute à celle créée dans les bassins de bullage. En outre, une diminution importante d'efficacité du transfert de l'ozone dans l'eau se produit en période estivale plus chaude, soit au moment où l'ozone est le plus utile pour le contrôle des goûts et des odeurs.

De plus les dispositifs de diffusion à fines bulles se détériorent rapidement et nécessitent un entretien coûteux.

On connaît, d'après LEITZKE O. & al : « Ozone treatment of surface water to provide high quality cooling water and process water » OZONE : SCIENCE AND ENGINEERING, LEWIS PUBLISHERS, CHELSEA, MI, US, vol.2, n°3, 1980, pages 229-239, un procédé de traitement d'eau qui comprend une étape de clarification, une étape d'ozonation et au moins une étape de filtration, et selon lequel une fraction du débit principal d'eau est dérivée, cette fraction d'eau dérivée est pressurisée et délivrée dans une tour d'échange liquide/gaz pour être enrichie en ozone contenu dans un gaz vecteur air ou oxygène, et la fraction d'eau enrichie en ozone est diluée dans le débit principal.

Ce procédé présente, notamment, l'inconvénient de réduire la capacité utile de filtration, la fraction d'eau étant prélevée à l'aval du filtre.

Le document de brevet FR2429187 décrit un autre procédé de traitement de l'eau dans lequel une partie d'un courant d'eau est traitée par de l'ozone.

L'invention a pour but surtout de fournir un procédé de traitement d'eau qui permet de remédier pour l'essentiel aux inconvénients énoncés précédemment, notamment en évitant une réduction de la capacité de filtration et en limitant la sursaturation de gaz dissous dans l'eau. Il est souhaitable que le procédé permette d'améliorer sensiblement l'étape d'ozonation en favorisant le transfert d'ozone dans l'eau, tout en restant d'une mise en oeuvre relativement économique et peu encombrante.

Le procédé de traitement d'eau selon l'invention comprend une étape d'ozonation et au moins une étape de filtration et est caractérisé en ce que :
- à l'amont de la filtration on dérive une fraction du débit principal d'eau ;
- on sature en ozone cette fraction d'eau dérivée à une pression supérieure à la pression atmosphérique,
- la partie non transférée du gaz vecteur enrichie en oxygène et en azote est extraite,
- et on dilue la fraction d'eau enrichie en ozone dans le débit principal en amont de la filtration.

La saturation en ozone peut s'effectuer à co-courant, ou à contre courant, ou selon un mélange des deux méthodes.

En outre, le procédé de traitement d'eau comprend une étape de clarification, une étape d'ozonation et au moins une étape de filtration, et la fraction du débit d'eau dérivée est pressurisée et délivrée dans une tour d'échange liquide/gaz pour être enrichie en ozone contenu dans un gaz vecteur air ou oxygène, la fraction d'eau enrichie en ozone étant diluée dans le débit principal ; la fraction du débit principal d'eau est dérivée en aval d'un bassin de clarification et en amont d'un bassin de contact grâce au branchement d'une conduite sur une canalisation reliant le bassin de clarification au bassin de contact, un filtre étant prévu à la suite du bassin de contact.

L'invention se distingue des procédés existants par le fait qu'elle réduit la quantité de gaz vecteur introduit dans le débit principal d'eau à traiter. Ce problème est constaté avec les autres systèmes utilisés auparavant, tels que les systèmes à fines bulles, les injecteurs mélangeurs statiques et autres. L'invention permet d'évacuer la partie de gaz vecteur indésirable à une tour de saturation ou d'échange. L'eau est prélevée en inter, ce qui n'affecte pas la capacité des filtres.

De préférence, la fraction d'eau dérivée enrichie en ozone est diluée dans la partie amont du bassin de contact réalisée sous forme d'un bassin de mise en solution.

La tour d'échange se comporte comme un saturateur, de sorte qu'en saturant en ozone la fraction dérivée il est possible d'injecter dans le débit principal tout l'ozone désiré en limitant l'injection d'oxygène.

L'ozone excédentaire est récupéré au sommet de la tour par une canalisation reliée à un destructeur d'ozone.

Le débit de la fraction dérivée peut être compris entre 5% et 10% du débit principal, avantageusement égal à environ 7.5%.

Le gaz vecteur peut être de l'oxygène, et la concentration d'ozone est au moins 5% en poids, avantageusement égale à environ 10% en poids.

Généralement, on pressurise la fraction d'eau dérivée avant de la faire circuler à contre-courant du gaz riche en ozone.

L'invention est également relative à une installation de traitement d'eau, en particulier d'eau de consommation, comprenant un bassin de clarification, au moins un filtre , des moyens de production d'ozone dans un gaz vecteur air ou oxygène , une tour d'échange liquide/gaz, un branchement de dérivation d'une fraction du débit principal d'eau en aval du bassin de clarification, ce branchement comportant un moyen de pompage permettant de pressuriser la fraction dérivée pour la délivrer dans la tour, un moyen d'admission de gaz vecteur riche en ozone dans la tour d'échange , un moyen pour recueillir la fraction d'eau dérivée enrichie en ozone et pour la diluer dans le débit principal d'eau, caractérisée en ce que la fraction du débit principal d'eau est dérivée en amont d'un bassin de contact, grâce au branchement d'une conduite sur une canalisation reliant le bassin de clarification au bassin de contact, un filtre étant prévu à la suite du bassin de contact.

La zone où la fraction d'eau dérivée enrichie en ozone est injectée et diluée dans le courant principal, est située en amont du filtre.

La fraction d'eau dérivée enrichie en ozone est diluée dans la partie amont du bassin de contact réalisée sous forme d'un bassin de mise en solution.

L'ozone excédentaire est récupéré au sommet de la tour par une canalisation reliée à un destructeur d'ozone.

Avantageusement, la tour d'échange liquide/gaz fonctionne à contre-courant.

Le bassin de mise en solution peut comporter une chambre amont délimitée par la paroi transversale verticale amont du bassin et par une cloison verticale parallèle à la paroi à distance de celle-ci, et la hauteur de la cloison est inférieure à la hauteur d'eau dans le bassin, la cloison étant reliée de manière étanche aux parois longitudinales du bassin de sorte que le passage de l'eau de la chambre vers l'aval doit s'effectuer par-dessus le bord supérieur de la cloison, à distance de laquelle est prévue une autre cloison parallèle verticale, qui dépasse le niveau de l'eau dans le bassin et s'arrête à distance du fond du bassin, de sorte qu'un passage subsiste en partie basse.

Le branchement de dérivation comporte un moyen de pompage permettant de pressuriser la fraction dérivée et de l'introduire sous pression en partie haute de la tour. La pression de la fraction dérivée refoulée par la pompe peut être de 1.5 à 10 bars absolus, toutefois la pression est avantageusement de l'ordre de 2.3 bars absolus (ou 230 kPa). La pression pourrait être augmentée à l'aide d'un compresseur ou d'un surpresseur. La tour d'échange liquide/gaz comporte un remplissage favorisant les échanges. Cette tour peut être réalisée avantageusement en acier inoxydable capable de résister aux fortes concentrations d'ozone. La tour est aussi prévue pour résister à une pression de l'ordre de 3 bars.

Selon l'invention, en plus d'effectuer la dissolution de l'ozone, le saturateur limite la sursaturation en gaz dissous, qui aurait pour conséquences l'embolie des filtres, une certaine toxicité qui interfère avec le traitement biologique, un dégazage d'ozone dans l'usine, et d'autres inconvénients..

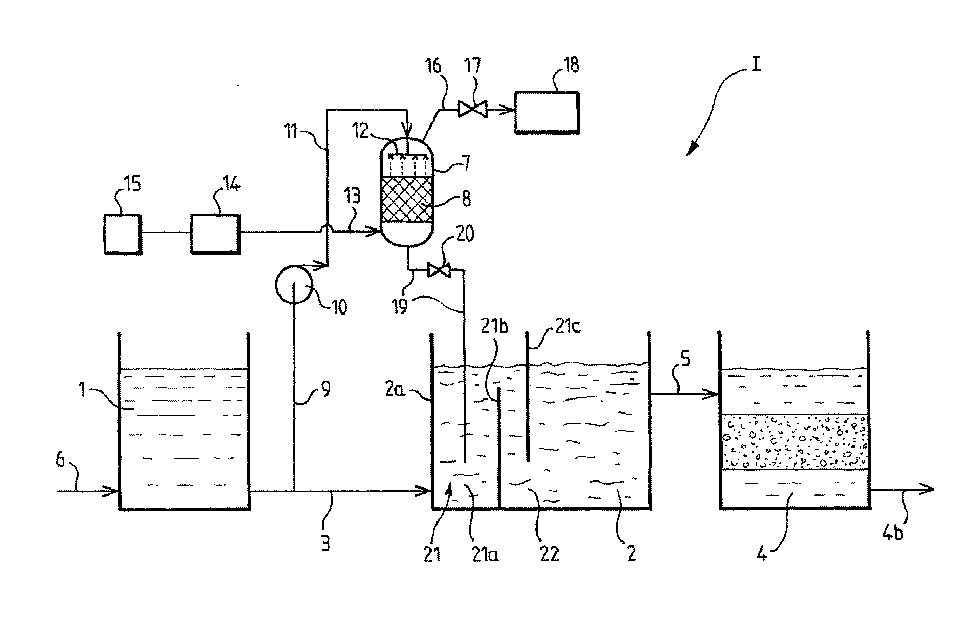

L'invention consiste, mises à part les dispositions exposées ci-dessus, en un certain nombre d'autres dispositions dont il sera plus explicitement question ci-après à propos d'un exemple de réalisation décrit avec référence au dessin annexé, mais qui n'est nullement limitatif.

Sur ce dessin, la figure unique est un schéma d'une partie d'une installation de traitement d'eau conforme à l'invention.

L'invention peut s'appliquer aussi bien à des installations existantes comportant un bassin de contact classique pour l'ozonation, qu'à de nouvelles installations à construire.

En se reportant à la figure unique du dessin, on peut voir une installation I de traitement d'eau de consommation qui comporte au moins un bassin de clarification 1 suivi d'un bassin de contact 2. Une canalisation 3 relie les bassins 1 et 2. Au moins un filtre 4 est prévu à la suite du bassin de contact 2 et est relié à ce dernier par une canalisation 5. Le filtre 4 peut être du type filtre à sable ou du type filtre biologique ou autre.

L'eau à traiter arrive au bassin de clarification 1 par une canalisation 6, tandis que l'eau traitée sort du filtre 4 par une canalisation 4b.

Dans une installation selon l'état de la technique, le bassin de contact 2 comporterait en partie inférieure des rampes poreuses pour une injection d'un gaz vecteur contenant de l'ozone en vue du transfert de l'ozone à l'eau à traiter. Comme déjà exposé, une telle solution n'est pas entièrement satisfaisante car elle génère une sursaturation de l'eau en gaz vecteur provoquant des embolies gazeuses sur le filtre 4. Dans le cas d'un filtre biologique, surtout lorsque le gaz vecteur est de l'oxygène, le fonctionnement est dégradé.

Selon l'invention, l'installation I comporte une tour 7 d'échange liquide/gaz. Dans le cas d'une installation existante qui est rénovée, les rampes éventuelles de distribution de gaz dans le fond du bassin 2 deviennent inutiles et peuvent être supprimées. Dans le cas d'une installation neuve, aucune rampe n'est prévue dans le fond du bassin 2.

La tour d'échange 7 est constituée, par exemple, par une colonne cylindrique en acier inoxydable capable de résister aux fortes concentrations d'ozone et à des pressions absolues supérieures à 3 bars (ou 300 kPa). L'axe géométrique de la tour 7 est vertical. Cette tour 7 comporte avantageusement un remplissage intérieur 8, formé par exemple d'éléments Raschig , ou d'éléments céramiques, de granules ou moyens équivalents, favorisant le contact gaz/liquide et le transfert de gaz dans le liquide, tout en permettant l'écoulement du gaz vers le haut et du liquide vers le bas. La hauteur de la tour 7 peut être de l'ordre de deux mètres seulement. La tour 7 est fermée en tête et en partie basse.

Une fraction du débit principal d'eau est dérivée à l'amont de la filtration 4, de l'aval du bassin de clarification 1 à l'amont du bassin de contact 2 grâce au branchement d'une conduite 9 sur la canalisation 3. La conduite 9 est reliée à l'aspiration d'une pompe 10 dont le refoulement est relié à une canalisation 11 qui arrive en tête de la tour 7. La canalisation 11 est reliée à une rampe 12 de distribution de liquide en partie haute de la tour 7.

La fraction dérivée de débit prélevée par la conduite 9 est comprise entre 1% et 50% du débit principal, de préférence entre 5% et 10%, avantageusement de l'ordre de 7.5 %. La fraction d'eau dérivée, pressurisée par la pompe 10, est délivrée dans la tour 7 sous une pression de préférence voisine de 2.3 bars absolus.

Un gaz vecteur riche en ozone est injecté en partie basse de la tour 7 par une canalisation 13 qui est branchée en amont, sur la sortie d'un ozoneur 14. Avantageusement l'ozoneur 14, plutôt que d'être alimenté en air, est alimenté en oxygène par exemple à partir d'un réservoir 15 contenant de l'oxygène sous pression ou de l'oxygène liquide ; le gaz vecteur est alors l'oxygène.

La concentration d'ozone dans l'oxygène est de préférence supérieure à 10% en poids et peut atteindre 20% avec un ozoneur 14 performant.

Bien que le transfert de l'ozone dans l'eau s'effectue selon un rendement élevé dans la tour 7, une partie de l'ozone s'échappe. Cette partie est récupérée au sommet de la tour 7 par une canalisation 16 munie d'une vanne 17 et reliée, en aval, à un destructeur d'ozone 18, de sorte que l'on évite une pollution de l'environnement par l'ozone dégagé.

En partie basse de la tour 7, la fraction dérivée d'eau enrichie en ozone est recueillie par une canalisation 19 munie d'une vanne 20. La canalisation 19 se prolonge au-delà de la vanne 20 pour plonger, sensiblement verticalement, dans la partie amont du bassin de contact 2. La canalisation 19 débouche en partie basse du bassin 2 pour permettre la dilution, dans l'eau du bassin, de la fraction enrichie en ozone. Des moyens d'agitation (non représentés) peuvent être prévus pour favoriser la dilution.

Avantageusement, la partie du bassin de contact 2 située vers l'amont est réalisée sous forme d'un bassin de mise en solution 21 qui comporte une chambre amont 21 a délimitée par la paroi transversale verticale amont 2a du bassin et par une cloison verticale 21b parallèle à la paroi 2a, à distance de celle-ci. La hauteur de la cloison 21b est inférieure à celle de la hauteur d'eau dans le bassin. La cloison 21 b est reliée de manière étanche aux parois longitudinales du bassin 2 de sorte que le passage de l'eau de la chambre 21 a vers l'aval doit s'effectuer par-dessus le bord supérieur de la cloison 21b. A distance de cette cloison 21b est prévue une autre cloison 21c parallèle verticale, qui dépasse le niveau de l'eau dans le bassin 2 et s'arrête à distance du fond du bassin, de sorte qu'un passage 22 subsiste en partie basse. Une chicane est ainsi formée par les parois 21b, 21c favorisant le mélange et la dilution de la fraction d'eau enrichie en ozone dans le débit principal.

La mise en oeuvre du procédé et le fonctionnement de l'installation sont les suivants.

La tour d'échange 7 se comporte comme un saturateur et permet de résoudre, en particulier, le problème le plus important qui est de limiter la sursaturation en gaz vecteur de l'eau traitée dans les filtres. La tour 7 permet d'exploiter le fait que, pour une même pression partielle, la solubilité de l'ozone dans l'eau est plus de dix fois supérieure à celle de l'oxygène. Plus précisément, la solubilité de l'ozone est environ 13.3 fois supérieure à celle de l'oxygène dans l'eau.

Ainsi en saturant en ozone une fraction dérivée d'environ 7,5% du débit principal d'eau traitée, il est possible d'injecter dans le débit principal tout l'ozone désiré en limitant l'injection d'oxygène (gaz vecteur) et donc la sursaturation en oxygène.

Le débit d'eau à traiter entre dans le bassin de clarification 1 et en sort, après clarification, par la conduite 3.

La fraction dérivée, aspirée et refoulée par la pompe 10 en tête de la tour 7, s'écoule dans la tour à contre-courant de l'oxygène enrichi d'ozone qui est injecté en partie basse de la tour 7. Le transfert d'ozone dans l'eau s'effectue avec un bon rendement notamment grâce au remplissage 8. L'efficacité du transfert de l'ozone dans la fraction dérivée d'eau peut atteindre 92% en poids.

L'ozone excédentaire est évacué par la conduite 16 vers le destructeur 18.

L'augmentation de l'efficacité du transfert de l'ozone dans l'eau avec la tour 7, par rapport à un système diffusant des bulles de gaz dans le fond de bassin de contact, est liée à plusieurs phénomènes notamment :
- la pression de transfert dans la tour 7 est plus forte, généralement supérieure à 2,3 bars absolus, et demeure constante dans toute la tour, alors que celle exercée sur des bulles dans un bassin est faible, par exemple de l'ordre de 1,4 bar au point d'injection pour diminuer progressivement au cours de la montée des bulles jusqu'à atteindre environ 1 bar absolu au niveau du plan d'eau ;
- la surface offerte au mécanisme de transfert est nettement plus importante dans la tour 7 grâce au remplissage 8 ;
- le temps de résidence du gaz vecteur dans la tour 7 est relativement élevé et peut être de l'ordre de dix minutes alors qu'il n'est que d'une vingtaine de secondes pour des fines bulles dans un bassin conventionnel.

La fraction dérivée, diluée dans le bassin 2, permet une ozonation efficace du débit total, sans sursaturation d'oxygène nuisible au filtre 4.

L'amélioration du rendement se traduit par des économies énergétiques importantes au niveau de la production d'ozone puisqu'il est maintenant possible d'utiliser l'oxygène comme gaz vecteur à l'aide de cette invention.

L'invention permet également de réaliser des économies d'équipements et de génie civil puisqu'elle évite, dans le cas d'une installation neuve, la construction d'un bassin avec des diffuseurs en partie basse.

La conduite de l'installation est rendue plus souple car il est possible, dans le cas où le bassin de contact 2 doit être arrêté, d'injecter la fraction d'eau enrichie en ozone en pré- ou en post-traitement, au lieu de l'injection prévue en inter-traitement , en modifiant seulement la canalisation 19 pour la faire déboucher, par exemple, dans le bassin 1 ou en aval du filtre 4.

On peut prévoir deux tours d'échange 7 en parallèle de sorte que, lors de travaux de maintenance sur une tour, l'autre tour prend le relais pour éviter un arrêt de production de l'installation.

Un exemple numérique non limitatif est donné ci-après simplement pour situer les ordres de grandeur.

Le débit d'eau arrivant dans le bassin de clarification 1 peut être de l'ordre de 100 000 m³/jour.

Le débit d'ozone à injecter pour le traitement de ce débit principal est estimé à 360 kg/jour. L'efficacité de transfert en poids de la tour 7 est estimée à environ 92%. Il convient donc d'injecter environ 400 kg/jour d'ozone en partie basse de la tour 7. En admettant que l'oxygène vecteur contient environ 10% en masse d'ozone, le débit d'oxygène doit être d'environ 3600 kg/jour.

Par suite des différences de solubilité de l'ozone et de l'oxygène dans l'eau, la concentration en oxygène de la fraction dérivée recueillie dans la canalisation 19 est faible et le débit d'oxygène injecté dans le débit total sera seulement d'environ 500 kg/jour, limitant ainsi la sursaturation en oxygène.

Bien que l'exemple décrit concerne une installation et un procédé de traitement d'eau de consommation, l'invention peut s'appliquer à tout traitement d'eau faisant intervenir une ozonation qui nécessite la réduction de la sursaturation des gaz.

## Revendications

1. Procédé de traitement d'eau comprenant une étape d'ozonation et au moins une étape de filtration, selon lequel une fraction du débit principal d'eau est dérivée en amont de la filtration, cette fraction d'eau dérivée est pressurisée et délivrée dans une tour (7) d'échange liquide/gaz pour être enrichie en ozone contenu dans un gaz vecteur air ou oxygène, et la fraction d'eau enrichie en ozone est diluée dans le débit principal, **caractérisé en ce que** :
- il comprend une étape de clarification dans un bassin de clarification (1), et la fraction du débit principal d'eau est dérivée en aval du bassin de clarification;
- le gaz vecteur riche en ozone est injecté en partie basse de la tour (7) en provenance d'un ozoneur (14),
- le débit de la fraction dérivée est compris entre 1% et 50% du débit principal et la tour d'échange se comporte comme un saturateur, de sorte qu'en saturant en ozone la fraction dérivée il est possible d'injecter dans le débit principal tout l'ozone désiré en limitant l'injection d'oxygène,
- et l'ozone excédentaire est récupéré au sommet de la tour (7) par une canalisation (16) reliée à un destructeur d'ozone (18).

2. Procédé selon la revendication 1, **caractérisé en ce que** le débit de la fraction dérivée est compris entre 5% et 10% du débit principal.

3. Procédé selon la revendication 1, **caractérisé en ce que** le débit de la fraction dérivée est égal à environ 7.5% du débit principal.

4. Procédé selon l'une des revendications précédentes, **caractérisé en ce que** la fraction du débit principal d'eau est dérivée en amont d'un bassin de contact (2) par branchement d'une conduite (9) sur une canalisation (3) reliant le bassin de clarification (1) au bassin de contact (2), un filtre (4) étant prévu à la suite du bassin de contact (2).

5. Procédé selon la revendication 4, **caractérisé en ce que** la fraction d'eau dérivée enrichie en ozone est diluée dans la partie amont du bassin de contact (2) réalisée sous forme d' un bassin de mise en solution (21).

6. Procédé selon l'une des revendications précédentes, **caractérisé en ce que** le gaz vecteur est de l'oxygène, et la concentration d'ozone est au moins 5% en poids, avantageusement égale à environ 10% en poids.

7. Installation de traitement d'eau comprenant : au moins un filtre (4) ; des moyens de production d'ozone (14) dans un gaz vecteur air ou oxygène ; une tour d'échange liquide/gaz (7) ; un branchement de dérivation (9) d'une fraction du débit principal d'eau en amont du filtre (4), ce branchement comportant un moyen de pompage (10) permettant de pressuriser la fraction dérivée pour la délivrer dans la tour (7) ; un moyen (19) pour recueillir la fraction d'eau dérivée enrichie en ozone et pour la diluer dans le débit principal d'eau, **caractérisée en ce qu'**elle comporte :
- un bassin de clarification (1), la fraction du débit principal d'eau étant dérivée en aval du bassin de clarification ;
- un moyen d'admission (13) de gaz vecteur riche en ozone en partie basse de la tour (7) en provenance d'un ozoneur (14),
- le débit de la fraction dérivée étant compris entre 1% et 50% du débit principal et la tour d'échange se comportant comme un saturateur, de sorte qu'en saturant en ozone la fraction dérivée il est possible d'injecter dans le débit principal tout l'ozone désiré en limitant l'injection d'oxygène,
- et un destructeur d'ozone (18) relié au sommet de la tour (7) par une canalisation (16) permettant de récupérer l'ozone excédentaire pour l'éliminer.

8. Installation selon la revendication 7, **caractérisée en ce que** le débit de la fraction dérivée est compris entre 5% et 10% du débit principal.

9. Installation selon la revendication 8, **caractérisée en ce que** le débit de la fraction dérivée est égal à environ 7.5% du débit principal.

10. Installation selon l'une des revendications 7 à 9, **caractérisée en ce qu'**elle comporte un bassin de contact (2), et la fraction du débit principal d'eau est dérivée en amont du bassin de contact (2) par branchement d'une conduite (9) sur une canalisation (3) reliant le bassin de clarification (1) au bassin de contact (2), un filtre (4) étant prévu à la suite du bassin de contact (2).

11. Installation selon l'une des revendications 7 à 10, **caractérisée en ce que** la fraction d'eau dérivée enrichie en ozone est diluée dans la partie amont du bassin de contact (2) réalisée sous forme d'un bassin de mise en solution (21).

12. Installation selon la revendication 11, **caractérisée en ce que** le bassin de mise en solution (21) comporte une chambre amont (21 a) délimitée par la paroi transversale verticale amont (2a) du bassin et par une cloison verticale (21b) parallèle à la paroi (2a) à distance de celle-ci, et la hauteur de la cloison (21b) est inférieure à celle de la hauteur d'eau dans le bassin, la cloison (21b) étant reliée de manière étanche aux parois longitudinales du bassin (2) de sorte que le passage de l'eau de la chambre (21a) vers l'aval doit s'effectuer par-dessus le bord supérieur de la cloison (21b), à distance de laquelle est prévue une autre cloison (21c) parallèle verticale, qui dépasse le niveau de l'eau dans le bassin (2) et s'arrête à distance du fond du bassin, de sorte qu'un passage (22) subsiste en partie basse.

## Patentansprüche

1. Verfahren zur Wasserbehandlung, das einen Ozonisierungsschritt und wenigstens einen Filtrationsschritt umfasst, wonach ein Anteil des Hauptwasserdurchflusses vor der Filtration umgeleitet wird, wobei dieser umgeleitete Wasseranteil mit Druck beaufschlagt wird und in einen Flüssigkeit/Gas-Austauschturm (7) geleitet wird, um mit in einem Luft- oder Sauerstoffträgergas enthaltenem Ozon angereichert zu werden, und der mit Ozon angereicherte Wasseranteil in dem Hauptdurchfluss verdünnt wird, **dadurch gekennzeichnet,** dass:
- es einen Klärungsschritt in einem Klärbecken (1) umfasst und der Anteil des Hauptwasserdurchflusses stromabwärts des Klärbeckens umgeleitet wird,
- das ozonreiche Trägergas, von einem Ozonisator (14) kommend, im unteren Teil des Turms (7) eingeleitet wird,
- die Menge des umgeleiteten Anteils zwischen 1 % und 50 % des Hauptdurchflusses beträgt und der Austauschturm sich wie ein Sättiger verhält, so dass es durch Ozonsättigung des umgeleiteten Anteils möglich ist, in den Hauptdurchfluss das gesamte gewünschte Ozon, unter Begrenzen der Sauerstoffeinleitung, einzuleiten, und
- das überschüssige Ozon am Kopf des Turms (7) über eine mit einem Ozonzerstörer (18) verbundene Rohrleitung (16) aufgefangen wird.

2. Verfahren nach Anspruch 1, **dadurch gekennzeichnet,** dass die Menge des umgeleiteten Anteils zwischen 5 % und 10 % des Hauptdurchflusses beträgt.

3. Verfahren nach Anspruch 1, **dadurch gekennzeichnet,** dass die Menge des umgeleiteten Anteils gleich etwa 7,5 % des Hauptdurchflusses beträgt.

4. Verfahren nach einem der vorstehenden Ansprüche, **dadurch gekennzeichnet,** dass der Anteil des Hauptwasserdurchflusses vor einem Kontaktbecken (2) durch Abzweigen einer Leitung (9) an einer Rohrleitung (3), die das Klärbecken (1) mit dem Kontaktbecken (2) verbindet, umgeleitet wird, wobei ein Filter (4) im Anschluss an das Kontaktbecken (2) vorgesehen ist.

5. Verfahren nach Anspruch 4, **dadurch gekennzeichnet,** dass der mit Ozon angereicherte umgeleitete Wasseranteil in dem stromaufwärtigen Teil des Kontaktbeckens (2), der in Form eines Lösungsbeckens (21) ausgeführt ist, verdünnt wird.

6. Verfahren nach einem der vorstehenden Ansprüche, **dadurch gekennzeichnet,** dass das Trägergas Sauerstoff ist und die Ozonkonzentration wenigstens 5 Gew.-%, vorteilhafterweise gleich etwa 10 Gew.-% beträgt.

7. Anlage zur Wasserbehandlung umfassend: wenigstens ein Filter (4), Mittel (14) zur Erzeugung von Ozon in einem Luft- oder Sauerstoffträgergas, einen Flüssigkeit/Gas-Austauschturm (7), einen Abzweig (9) zum Umleiten eines Anteils des Hauptwasserdurchflusses vor dem Filter (4), wobei dieser Abzweig ein Pumpmittel (10) umfasst, das ermöglicht, den umgeleiteten Anteil für sein Einleiten in den Turm (7) mit Druck zu beaufschlagen, ein Mittel (19) für die Aufnahme des mit Ozon angereicherten umgeleiteten Wasseranteils und für dessen Verdünnung im Hauptwasserdurchfluss, **dadurch gekennzeichnet,** dass sie umfasst:
- ein Klärbecken (1), wobei der Anteil des Hauptwasserdurchflusses stromabwärts des Klärbeckens umgeleitet wird,
- ein Mittel zum Zuführen (13) von ozonreichem Trägergas, von einem Ozonisator (14) kommend, im unteren Teil des Turms (7),
- wobei die Menge des umgeleiteten Anteils zwischen 1 % und 50 % des Hauptdurchflusses beträgt und wobei der Austauschturm sich wie ein Sättiger verhält, so dass es durch Ozonsättigung des umgeleiteten Anteils möglich ist, in den Hauptdurchfluss das gesamte gewünschte Ozon, unter Begrenzen der Sauerstoffeinleitung, einzuleiten, und wobei
- ein mit dem Kopf des Turms (7) über eine Rohrleitung (16) verbundener Ozonzerstörer (18) ermöglicht, das überschüssige Ozon aufzufangen, um es zu entfernen.

8. Anlage nach Anspruch 7, **dadurch gekennzeichnet,** dass die Menge des umgeleiteten Anteils zwischen 5 % und 10 % des Hauptdurchflusses beträgt.

9. Anlage nach Anspruch 8, **dadurch gekennzeichnet,** dass die Menge des umgeleiteten Anteils gleich etwa 7,5 % des Hauptdurchflusses beträgt.

10. Anlage nach einem der Ansprüche 7 bis 9, **dadurch gekennzeichnet,** dass sie ein Kontaktbecken (2) umfasst und der Anteil des Hauptwasserdurchflusses vor dem Kontaktbecken (2) durch Abzweigen einer Leitung (9) an einer Rohrleitung (3), die das Klärbecken (1) mit dem Kontaktbecken (2) verbindet, umgeleitet wird, wobei ein Filter (4) im Anschluss an das Kontaktbecken (2) vorgesehen ist.

11. Anlage nach einem der Ansprüche 7 bis 10, **dadurch gekennzeichnet,** dass der mit Ozon angereicherte umgeleitete Wasseranteil in dem stromaufwärtigen Teil des Kontaktbeckens (2), der in Form eines Lösungsbeckens (21) ausgeführt ist, verdünnt wird.

12. Anlage nach Anspruch 11, **dadurch gekennzeichnet,** dass das Lösungsbecken (21) eine stromaufwärtige Kammer (21 a) umfasst, die durch die stromaufwärtige vertikale Querwand (2a) des Beckens und durch eine vertikale Trennwand (21b), welche zu der Wand (2a) in einem Abstand von dieser parallel verläuft, begrenzt ist, und die Höhe der Trennwand (21b) geringer als die Wasserhöhe in dem Becken ist, wobei die Trennwand (21b) mit den Längswänden des Beckens (2) dicht verbunden ist, so dass der Durchlauf des Wassers von der Kammer (21 a) in stromabwärtiger Richtung über den oberen Rand der Trennwand (21b) erfolgen muss, in einem Abstand von der eine weitere vertikale parallele Trennwand (21 c) vorgesehen ist, die den Pegel des Wassers in dem Becken (2) übersteigt und in einem Abstand vom Boden des Beckens endet, so dass im unteren Teil ein Durchgang (22) bestehen bleibt.

## Claims

1. Method for treating water comprising an ozonization step and at least one filtration step, in which a fraction of the main water stream is diverted upstream of the filtration, said diverted fraction of water is pressurized and delivered to a liquid/gas exchange tower (7) in order to be enriched with ozone present in an air or oxygen carrier gas, and the ozoneenriched fraction of water is diluted in the main stream, **characterized in that**:
- it comprises a clarification step in a clarification tank (1), and the fraction of the main water stream is diverted downstream of the clarification tank;
- the ozone-rich carrier gas is injected at the bottom part of the tower (7) coming from an ozonizer (14),
- the stream of the diverted fraction is between 1% and 50% of the main stream and the exchanger tower behaves like a saturator, so that by saturating the diverted fraction with ozone, it is possible to inject all the desired ozone into the main stream while limiting the injection of oxygen,
- and the surplus ozone is recovered at the top of the tower (7) by a pipe (16) connected to an ozone destroyer (18).

2. Method according to Claim 1, **characterized in that** the stream of the diverted fraction is between 5% and 10% of the main stream.

3. Method according to Claim 1, **characterized in that** the stream of the diverted fraction is about 7.5% of the main stream.

4. Method according to one of the preceding claims, **characterized in that** the fraction of the main water stream is diverted upstream of a contact tank (2), via the branch of a conduit (9) on a pipe (3) connecting the clarification tank (1) to the contact tank (2), a filter (4) being provided after the contact tank (2).

5. Method according to Claim 4, **characterized in that** the ozone-enriched diverted fraction of water is diluted in the upstream part of the contact tank (2) prepared in the form of a dissolution tank (21).

6. Method according to one of the preceding claims, **characterized in that** the carrier gas is oxygen, and the ozone concentration is at least 5% by weight, advantageously about 10% by weight.

7. Water treatment installation comprising: at least one filter (4); means (14) for producing ozone in an air or oxygen carrier gas; a liquid/gas exchange tower (7); a branch for diverting (9) a fraction of the main water stream upstream of the filter (4), said branch comprising pumping means (10) for pressurizing the diverted fraction to deliver it to the tower (7); means (19) for collecting the ozone-enriched diverted fraction of water and for diluting it in the main water stream, **characterized in that** it comprises:
- a clarification tank (1), the fraction of the main water stream being diverted downstream of the clarification tank;
- intake means (13) for ozone-rich carrier gas in the bottom portion of the tower (7) coming from an ozonizer (14),
- the stream of the diverted fraction being between 1% and 50% of the main stream and the exchange tower behaving like a saturator, so that by saturating the diverted fraction with ozone, it is possible to inject all the desired ozone into the main stream while limiting the injection of oxygen,
- and an ozone destroyer (18) connected to the top of the tower (7) by a pipe (16) for recovering the surplus ozone to eliminate it.

8. Installation according to Claim 7, **characterized in that** the stream of the diverted fraction is between 5% and 10% of the main stream.

9. Installation according to Claim 8, **characterized in that** the stream of the diverted fraction is about 7.5% of the main stream.

10. Installation according to one of Claims 7 to 9, **characterized in that** it comprises a contact tank (2), and the fraction of the main water stream is diverted upstream of the contact tank (2), via a branch of a conduit (9) on a pipe (3) connecting the clarification tank (1) to the contact tank (2), a filter (4) being provided after the contact tank (2).

11. Installation according to one of Claims 7 to 10, **characterized in that** the ozone-enriched diverted fraction of water is diluted in the upstream part of the contact tank (2) prepared in the form of a dissolution tank (21).

12. Installation according to Claim 11, **characterized in that** the dissolution tank (21) comprises an upstream chamber (21a) bounded by the upstream vertical transverse wall (2a) of the tank and by a vertical partition (21b) parallel to the wall (2a) at a distance therefrom, and the height of the partition (21b) is lower than that of the water height in the tank, the partition (21b) being connected tightly to the longitudinal walls of the tank (2) so that the passage of the water from the chamber (21a) downstream must take place above the upper edge of the partition (21b), at a distance from which another vertical parallel partition (21c) is provided, extending above the water level in the tank (2) and stopping at a distance from the bottom of the tank, so that a passage (22) subsists in the bottom portion.
